# EUROPEAN PATENT APPLICATION

(11) **EP 4 775 527 A1**
(43) Date of publication of application: **15.07.2026**
(21) Application number: 25184186.2
(22) Date of filing: 20.06.2025
(51) Int. Cl.: B66F 9/18, B62B 3/04

(54) **FORKLIFT FORK**

(30) Priority: 14.01.2025 KR 20250000072 U
(71) Applicant: Om, Yong Tae, Gyeonggi-do 10260 (KR)
(72) Inventor: Om, Yong Tae, Gyeonggi-do 10260 (KR)
(74) Representative: Haseltine Lake Kempner LLP

(57) **Abstract**

A forklift (10) fork (100) according to the present invention includes a fork body (110) and a catch portion (120a, 120b, 120c, 120d or 120e) projecting from one end of the fork body such that a transporting load catches on the catch portion without slipping. The forklift fork is constructed such that the catch portion projecting from the front end of the fork body catches the transporting load to prevent slip of the transporting load, thereby delivering an effect of making it possible to easily and efficiently perform a transportation operation. The catch portion may be embodied as an integral protrusion, a bolt, or a pin projecting from the front end or the center of the fork body. It might also be embodied as grooves (120e) formed in two opposite sides of a front end or a center of the fork body.

## Description

### BACKGROUND OF THE INVENTION

### Field of the Invention

The present invention relates to a forklift fork, and more particularly to a forklift fork capable of preventing slip of a load.

### Description of the Related Art

Generally, a forklift is equipped with a pair of forks (feet) that are capable of supporting loads, thereby allowing the forklift to perform loading and unloading operations.

Specifically, the forklift is constructed such that the pair of forks are mounted at the front end of the forklift so as to be vertically movable by means of a lift unit. Each of the forks is configured to protrude forward by a predetermined length, enabling it to support and transport the lower side of a pallet having predetermined dimensions on which loads are placed.

Meanwhile, the forks can directly transport various non-palletized items, such as rolled coils or flat panels.

Furthermore, the forklift can also be used to push a load with the front ends of the forks. For loads that cannot be easily lifted by supporting from underneath, towing means such as ropes or chains can be utilized. These towing ropes or chains may be tied to or hooked onto the forks for the purpose of transport.

A technique relating to forklift forks has been disclosed in Korean Unexamined Patent Application Publication No. 1997-0042244.

However, the technique disclosed in the patent document has a drawback in that, during the unloading process, loads may slip from the front ends of the forks, thereby causing inconvenience and reducing work efficiency.

### [Related Art Document]

### [Patent Document]

(Patent Document 1) Korean Unexamined Patent Application Publication No. 10-1997-0042244 (published on July 24. 1997)

### SUMMARY OF THE INVENTION

Therefore, the present invention has been made in view of the above problems, and it is an object of the present invention to provide a forklift fork capable of preventing slip of a load by catching the load by the end thereof.

In accordance with the present invention, the above and other objects can be accomplished by the provision of a forklift fork including a fork body and a catch portion projecting from one end of the fork body such that a transporting load catches on the catch portion without slipping.

The catch portion may be embodied as a protrusion integrally formed at a front end or a center of the fork body and projecting therefrom.

The catch portion may be embodied as a bolt having a threaded portion engaged with a threaded hole formed in a front end or a center of the fork body.

The catch portion may be embodied as a pin coupled to a hole formed in a front end or a center of the fork body or a project formed the front end or the center of the fork body by means of welding.

The catch portion may be embodied as grooves formed in two opposite sides of a front end or a center of the fork body.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view illustrating a forklift to which forks according to the present invention are applied;
FIGs. 2 to 4 are side views and exploded perspective views illustrating the forklift forks according to various embodiments of the present invention;
FIG. 5 is a side cross-sectional view of a forklift fork according to another embodiment different from the embodiment shown in FIG. 4; and
FIGs. 6 and 7 are perspective view and plan view illustrating forklift forks according to other embodiments of the present invention.

### DETAILED DESCRIPTION OF THE INVENTION

Hereinafter, preferred embodiments of the present invention will be described with reference to the attached drawings so as to enable the embodiments to be easily understood by one of ordinary skill in the art to which this invention belongs. However, the present invention is not limited to the embodiments disclosed hereinafter, but may be embodied in different modes. The same reference numbers may refer to the same elements throughout the specification.

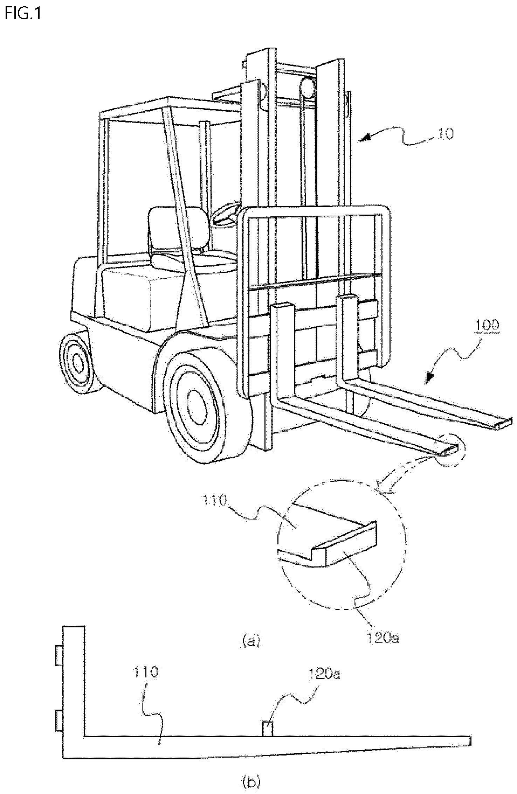

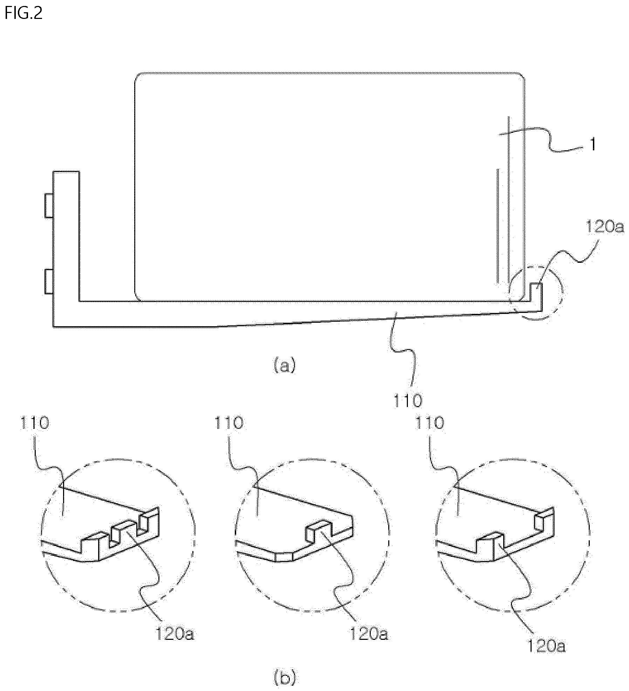

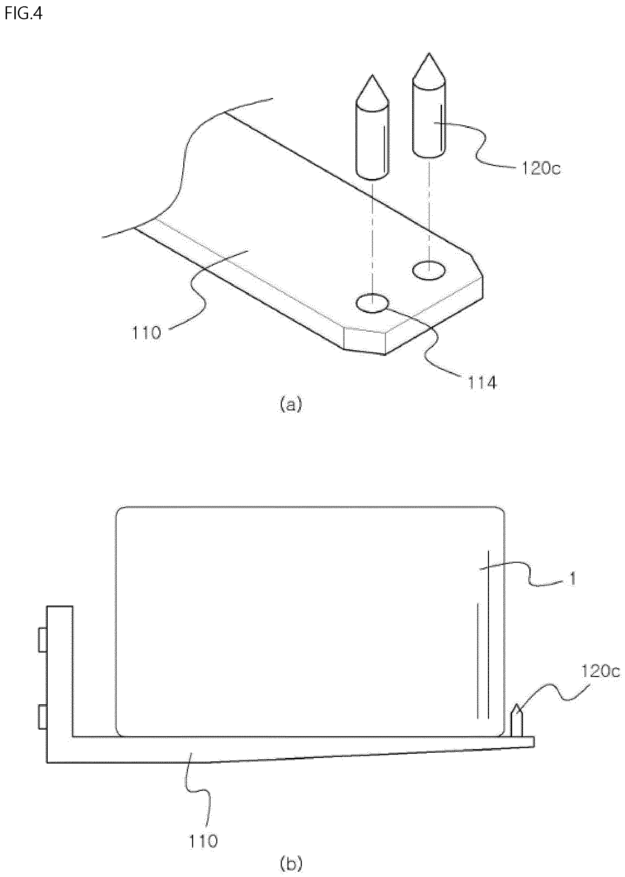

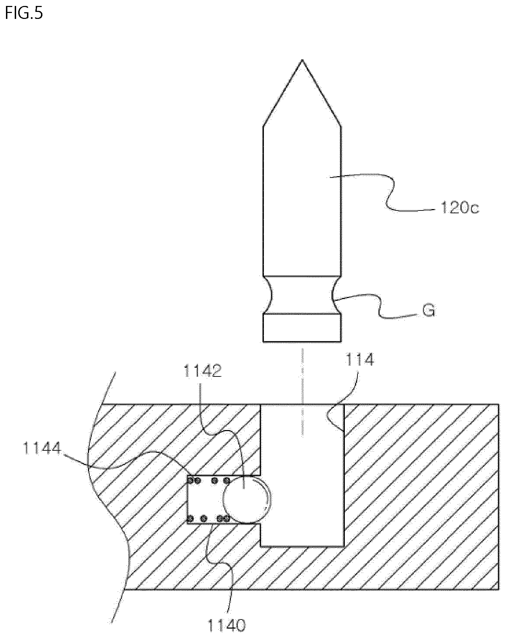

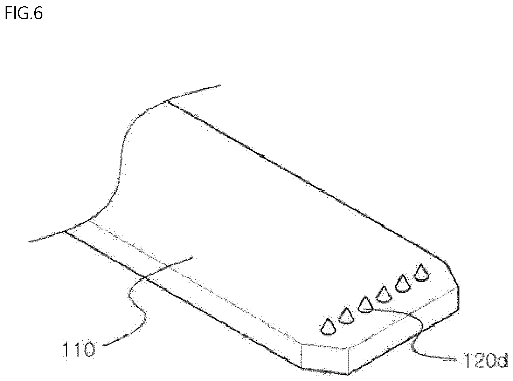

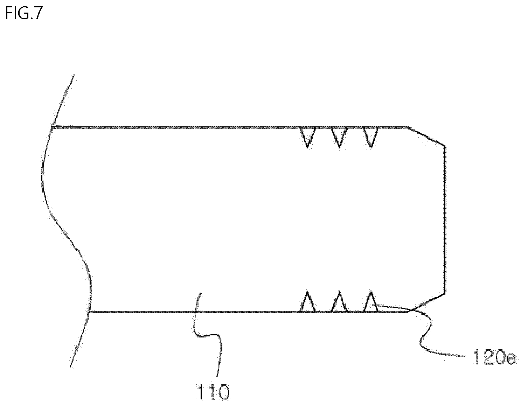

FIG. 1 is a perspective view illustrating a forklift to which forklift forks according to the present invention are applied. FIGs. 2 to 4 are side views and exploded perspective views illustrating forklift forks according to various embodiments of the present invention. FIG. 5 is a side cross-sectional view of a forklift fork according to another embodiment different from the embodiment shown in FIG. 4. FIGs. 6 and 7 are a perspective view and a plan view, respectively, illustrating forklift forks according to other embodiments of the present invention.

Referring to FIGs. 1 to 7, the forklift fork 100 according to an embodiment of the present invention includes fork bodies 110 and catch portions 120a, 120b, 120c, 120d or 129e. The fork bodies 110 are disposed at two opposite sides of the front surface of the forklift 110 in the state of being spaced apart from each other so as to transport a transporting load 1 loaded thereon.

As illustrated in FIGs. 1 to 4, each of the fork bodies 110 is bent to have a vertical part and a horizontal part when viewed in side view. The vertical part is a portion supported by the forklift 10, and the horizontal part is a portion configured to support the transporting load 1.

As illustrated in FIGs. 1 and 2, the catch portion 120a projects from the front end of the horizontal part of the fork body 110 to catch the transporting load 1 to thus prevent slippage of the transporting load 1. The catch portion 120a is embodied by a protrusion integrally formed at the front end of the fork body 110.

Although the catch portion 120a is illustrated as projecting from the front end of the horizontal part of the fork body 110, the catch portion 120a may also be provided in the center of the horizontal part of the fork body 110 (see (b) of FIG. 1).

As illustrated in FIG. 2, the catch portion 120a may be formed in a divided form in addition to the integral form, and may be provided at one or both of the center and two opposite sides of the front end of the fork body 110.

Although not illustrated in the drawings, the corners of the front end of the fork body 110 may be rounded or chamfered such that the corners do not catch on another object when moving toward the transporting load 1 and the transporting load 1 loaded on the fork body 110 does not escape from the fork body 110. Alternatively, although not illustrated in the drawings, the catch portion 120a may be provided on the upper surface thereof with a protrusion to reduce the area contacting the bottom surface of the transporting load 1.

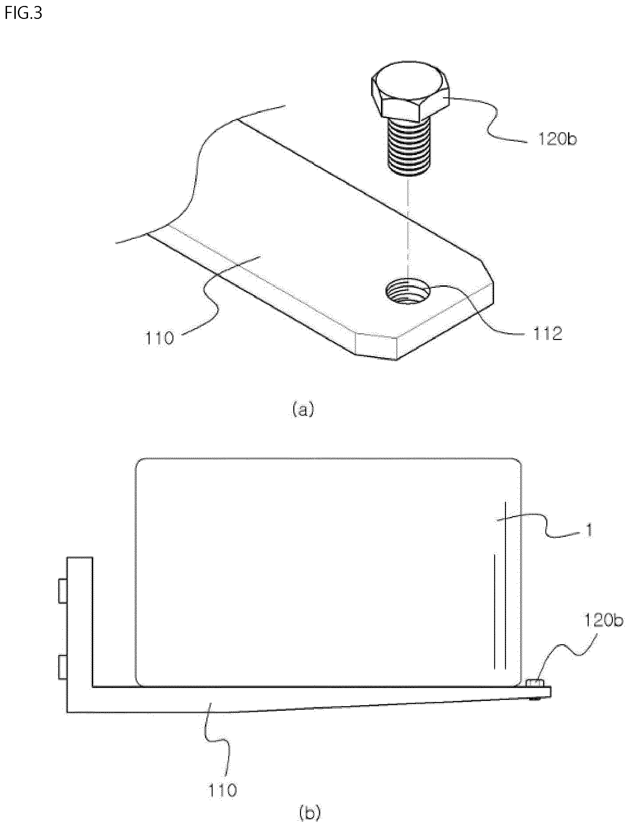

As illustrated in FIG. 3, a catch portion 120b according to another embodiment of the present invention may be embodied as a bolt having a threaded portion which is engaged with a threaded hole 112 formed in the center of the front end of the fork body 110. Here, the catch portion 120b is detachably engaged with the threaded hole 112 in the fork body 110, and the transporting load 1 cannot be separated by means of the head portion of the catch portion 120b. Alternatively, the catch portion 120c may be provided in the center of the horizontal part of the fork body 110.

As illustrated in FIG. 4, a catch portion 120c according to a still another embodiment may be embodied as pins respectively coupled to holes 114 formed in two opposite sides of the front end of the fork body 110. Here, the catch portion 120c may be detachably coupled to the hole 114 in the fork body 110. Furthermore, the catch portion 120c may be provided in the center of the horizontal part of the fork body 110.

The catch portion 120c is preferably formed to have a sharp upper end.

Although not illustrated in the drawings, the catch portion 120c may have a threaded portion formed on the lower end thereof which is threadedly engaged with a threaded hole 114 formed in the fork body 110.

As illustrated in FIG. 5, the catch portion 120c may be coupled to the hole 114 formed in the fork body 110 in a snap coupling manner. To this end, a groove G having a semi-circular cross-section may be formed along the outer circumferential surface of the lower end of the catch portion 120c.

Here, a branched hole 1140 may be formed in the fork body 110 in a direction perpendicular to the hole 114 formed in the fork body 110, and a spherical body 1142 and an elastic element 1144 may be provided in the branched hole 1142. Consequently, the lower end of the catch portion 120c pushes the spherical body 1142 backwards when the catch portion 120c is inserted into the hole 114. When the groove G in the catch portion 120c arrives the spherical body 1142, the spherical body 1142 is moved forwards and engaged with the groove G in the catch portion 120c by means of the elastic force of the catch portion 120c, thereby coupling the catch portion 120c to the hole 114 in the fork body 110.

As illustrated in FIG. 6, a catch portion 120d according to yet another embodiment of the present invention may be embodied as a plurality of protrusions welded to the front end of the fork body 110 in a line. Alternatively, the catch portion 120d may be provided in the center of the horizontal part of the fork body 110.

As illustrated in FIG. 7, a catch portion 120e according to still yet another embodiment of the present invention may be embodied as v-shaped grooves formed in two opposite sides of the front end of the fork body 110 to prevent escape of the transporting load 1. Alternatively, the catch portion 120e may be provided in the center of the horizontal part of the fork body 110.

In the forklift fork 100 according to the embodiments of the present invention, when the transporting load 1 is moved in the state of being lifted and is unloaded downwards, the catch portion 120a, 120b, 120c, 120d or 120e, which provided at the front end of the fork body 110 so as to protrude therefrom, catches the transporting load 1, thereby preventing escape of the transporting load 1.

In other words, because the catch portion 120a is provided as a protrusion at the front end of the horizontal part of the fork body 110, the transporting load 1 catches on the catch portion 120a without slipping.

Furthermore, because the catch portion 120b is provided as a bolt threadedly coupled to the threaded hole 112 formed in the center of the front end of the fork body 110, the transporting load 1 catches on the catch portion 120b without slipping.

In addition, because the catch portion 120c is provided as the pins coupled to the holes 114 formed in the two opposite sides of the front end of the fork body 110, the transporting load 1 catches on the catch portion 120c without slipping.

As is apparent from the above description, the forklift fork according to the embodiments of the present invention is constructed such that the catch portion projecting from the front end of the fork body catches the transporting load to prevent slip of the transporting load, thereby delivering an effect of making it possible to easily and efficiently perform an operation of transporting the transporting load.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A forklift fork comprising:
a fork body; and
a catch portion projecting from one end of the fork body such that a transporting load catches on the catch portion without slipping.

2. The forklift fork according to claim 1, wherein the catch portion is embodied as a protrusion integrally formed at a front end or a center of the fork body and projecting therefrom.

3. The forklift fork according to claim 1, wherein the catch portion is embodied as a bolt having a threaded portion engaged with a threaded hole formed in a front end or a center of the fork body.

4. The forklift fork according to claim 1, wherein the catch portion is embodied as a pin coupled to a hole formed in a front end or a center of the fork body or a project formed the front end or the center of the fork body by means of welding.

5. The forklift fork according to claim 1, wherein the catch portion is embodied as grooves formed in two opposite sides of a front end or a center of the fork body.
